# EUROPEAN PATENT APPLICATION

(11) **EP 4 847 190 A1**
(43) Date of publication of application: **02.12.2026**
(21) Application number: 26167272.9
(22) Date of filing: 24.03.2026
(51) Int. Cl.: B23P 6/00, B24C 1/04, B24C 3/32, F01D 5/00, F01D 5/28, F01D 25/00

(54) **SYSTEMS AND METHODS FOR TREATING A MODULE**

(30) Priority: 30.05.2025 US 202519223441
(71) Applicant: General Electric Company, Cincinnati, Ohio 45215 (US)
(72) Inventor: MAST, Jonathan David, West Chester, 45069 (US); RAMIREZ ORTIZ, Omar Alejandro, 76146 Querétaro (MX); TRAPP, Timothy, Evendale, 45215 (US); VAZE, Suhas Prabhakar, West Chester, 45069 (US); GUNDRUM, Michael Joseph, Evendale, 45215 (US); CRUZ JIMENEZ, Minerva Mariana, 76146 Querétaro (MX); SORELL, Rachel Marie, Niskayuna, 12309-1027 (US); ANDERSEN, Michael, West Chester, 45069 (US); MUSSEL DE OLIVEIRA, Aline, 356 Rio de Janeiro (BR)
(74) Representative: Openshaw & Co.

(57) **Abstract**

A system (200)(300) for treating a module (208) of a gas turbine engine may include a fixture (202) including a receptacle (204) defining an interior space (206) for receiving the module (208) therein. The receptacle (204) is configured to hold the module (208) in a predetermined orientation with at least a portion of the module (208) positioned in the interior space (206). The fixture (202) further includes an interface (264) configured to selectively engage with a plurality of different components for conducting different treatments of the work portion (220) of the module (208). The plurality of different components for conducting different treatments of the work portion (220) of the module (208) include one or more protective barrier components (214) for protecting a non-work portion (222) of the module (208) that is not being treated and a heating assembly (342) configured for localized heating of the work portion (220) of the module (208).

## Description

### TECHNICAL FIELD

These teachings relate generally to treating surfaces of components of machinery and more particularly to systems and methods for treating a module of a gas turbine engine.

### BACKGROUND

Aircraft engines, such as gas turbine engines, may be subjected to harsh operating conditions, including high operating temperatures, exposure to gaseous products of combustion, the presence of environmental contaminants, and ingestion of foreign objects into the engine, such as dust, sand, ash, salt, rocks, concrete, ice, debris, and other objects. Certain components of these engines often include various types of protective coatings. For example, thermal barrier coatings (TBCs) and/or environmental barrier coatings (EBCs) may be applied to surfaces of the components to protect the components from damage. However, the protective coatings of the components are also susceptible to various forms of damage such as spallation, erosion, oxidation, and corrosion. Because gas turbine engines are complex machines comprised of numerous components with different sensitivities, tolerances, coatings, and performance requirements, treating or repairing a component or a coating thereon within the engine can be labor intensive and in some cases can require at least partial disassembly of the engine and even removal of the component so that treatment of the component can be done in isolation from the rest of the engine. Accordingly, improved systems and methods to repair such components or the protective coatings thereon are desirable.

### BRIEF DESCRIPTION OF DRAWINGS

Various needs are at least partially met through provision of the systems and methods for treating a module comprising an assembly of different parts described in the following detailed description, particularly when studied in conjunction with the drawings. A full and enabling disclosure of the aspects of the present description, including the best mode thereof, directed to one of ordinary skill in the art, is set forth in the specification, which refers to the appended figures, in which:
FIG. 1 is a cross-sectional view of a gas turbine engine for an aircraft in accordance with various embodiments of these teachings;
FIG. 2 is a perspective view of a first configuration of a system for treating a module including a fixture having a receptacle in which a high pressure turbine module of a gas turbine engine is received, the system configured for conducting different treatments to a work portion of the module in accordance with various embodiments of these teachings;
FIG. 3 is a cross-sectional side view of the system of FIG. 2 showing the high pressure turbine module received in the receptacle with a work portion of the module to be treated being accessible and a non-work portion of the module being protected by protective barriers in accordance with various embodiments of these teachings;
FIG. 4 is a cross-sectional perspective view of a portion of the system of FIG. 2 including an exposed work portion comprising a forward web of a stage one disk of the high pressure turbine module and protective barriers for protecting a non-work portion of the turbine module including resilient protective barriers and radially inner and radially outer rigid protective barriers in accordance with various embodiments of these teachings;
FIG. 5 is a perspective view of a portion of the system of FIG. 2 with some of the rigid protective barriers removed to show the resilient protective barriers and spacers in accordance with various embodiments of these teachings;
FIG. 6 is a perspective view of a second configuration of the system for treating a module including the high pressure turbine module positioned partially within the fixture of FIG. 2 and a heating assembly adjacent to an opening of the receptacle for heating the work portion of the module in accordance with various embodiments of these teachings;
FIG. 7 is a cross-sectional view of the system of FIG. 6 in accordance with various embodiments of these teachings;
FIG. 8 is a cross-sectional partially exploded view of the system of FIG. 6 including an annular heating assembly mounting ring and alignment shafts positioned above the fixture prior to installation thereof at an interface of the fixture in accordance with various embodiments of these teachings;
FIG. 9 is a perspective view of a portion of the system of FIG. 6 including the heating assembly mounting ring (shown in phantom) positioned at the interface of the fixture with an alignment shaft positioned between dovetail portions of the stage one disk in accordance with various embodiments of these teachings;
FIG. 10 is a cross-sectional perspective view of a portion of the system of FIG. 6 including the heating assembly including a thermocouple positioned in engagement with a non-work portion of the stage one disk in accordance with various embodiments of these teachings;
FIG. 11 is a perspective view of the system of FIG. 6 including a fume extraction system and a controller for controlling a curing operation using the heating assembly of FIG. 6 in accordance with various embodiments of these teachings;
FIG. 12 is a cross-sectional view of a third configuration of the system for treating a module including the fixture of FIG. 2 with an alternate heating assembly in the form of a furnace enclosure positioned at the interface of the fixture for heating a plurality of components of the module in accordance with various embodiments of these teachings;
FIG. 13 is a perspective view of a portion of the system of FIG. 12 including a portion of the rotor of the high pressure turbine module mounted to a rotor mounting portion of the fixture in accordance with various embodiments of these teachings;
FIG. 14 is a perspective view of the system of FIG. 12 showing an upper portion of the furnace enclosure in accordance with various embodiments of these teachings; and
FIG. 15 is an exemplary method for treating a module in accordance with various embodiments of these teaching.

Elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present teachings. Also, common but well-understood elements that are useful or necessary in a commercially feasible embodiment are often not depicted in order to facilitate a less obstructed view of these various embodiments of the present teachings. Certain actions and/or steps may be described or depicted in a particular order of occurrence while those skilled in the art will understand that such specificity with respect to sequence is not actually required.

### DETAILED DESCRIPTION

The present approaches described herein provide for systems and methods for treating a module of a gas turbine engine, such as a high pressure turbine module. For example, the approaches described herein allow for the removal of coatings from a surface of a component and/or preparation of the surface of the component for further treatment at a module level, without requiring removal of the component from the module. These approaches also allow for the application of treatments to a surface of a component of a module, such as protective coatings, at the module level without requiring removal of the component from the module. These approaches further allow for the application of heat or other treatments for curing a protective coating on a component of the module without requiring removal of the component from the module. Advantageously, in some embodiments, the same fixture can be used for each of a plurality of different treatments so that the module need not be removed from the fixture to accomplish each of the plurality of different treatments.

Gas turbine engines have various modules, or assemblies of a plurality of parts, for performing specific functions including, for example, an intake module, a compressor module, a combustion module, a low pressure turbine module, a high pressure turbine module, etc. Coatings may be provided on certain parts (e.g., disks, blades, etc.) of the modules to protect the parts, such as against high temperatures, corrosion, erosion, foreign object damage (FOD) and oxidation. However, over time these coatings can degrade or otherwise be damaged and may need to be repaired, removed and/or reapplied.

Traditional approaches typically perform the treatment of a surface of a component of a module, such as removal and reapplication of a coating with the component in a piece-part condition requiring at least a partial disassembly of the module to remove the component from the module. The removal of the component to be treated is typically done to protect other components of the module from potential damage caused by the treatment or treatments of the component. For example, other components of the module, such as blades, bearings, seals, coatings, etc. may be sensitive to the abrasives or chemicals used to remove a coating from the surface of the component or to prepare the surface for a new coating. The other components may also be sensitive to the new coating being applied to the component. Similarly, the other components of the module may be sensitive to the temperatures required to cure a new coating applied to the component. Accordingly, treating a component of a module at a piece-part level can be time-consuming and labor-intensive. Advantageously, the systems and methods described herein can eliminate the need to treat a component at a piece-part level and instead allows treatment of the component without removal of the component from its module. This allows for significant savings of time and labor, and can also reduce the potential for damage to other components of the module during disassembly and reassembly thereof.

Generally speaking, the various aspects of the present disclosure may be employed with a fixture including a receptacle defining an opening and an interior space configured for receiving at least a portion of the module and an interface configured to selectively engage with a plurality of different components for use in conducting different treatments of a work portion of the module. The plurality of different components include one or more protective barrier components for protecting a non-work portion of the module that is not being treated from an incursion of foreign material during application of an abrasive or a chemically active material to the work portion. The plurality of different components for use in conducting different treatments also includes a heating assembly sized and configured to be positioned in or adjacent to the opening of the receptacle. The heating assembly is configured for localized heating of the work portion of the module. The module level treatment approaches described herein are less labor-intensive and time-consuming than previously known treatment approaches.

In some embodiments, the module of the gas turbine engine is a high pressure turbine module. In some aspects, the work portion includes a forward web portion of a stage one disk of the high pressure turbine.

In some embodiments, the one or more protective barriers include a radially outer rigid protective barrier member for inhibiting the incursion of foreign material into or onto at least a radially outer non-work portion of the module, and a radially inner rigid protective barrier member for inhibiting the incursion of foreign particles into or onto at least a radially inner non-work portion of the module. The radially outer rigid protective barrier member and the radially inner protective barrier member together define an opening to allow access to the work portion of the module.

In some embodiments, a heating assembly is configured for being mounted to an interface of the fixture for heating a work portion of the module. In some embodiments, the heating assembly includes an insulative mat having a heating coil integrated therewith. The heating coils may be arranged in a spiral within the insulative mat. In some aspects, the heating assembly includes an exterior rigid insulator, and a pair of spaced-apart interior rigid heating coil supports. The insulative mat and the heating coil are held in place between the exterior rigid insulator and the pair of spaced-apart interior rigid heating coil supports and are positioned such that the insulative mat and heating coil are spaced-apart from the work portion of the module. In some aspects, the exterior rigid insulator and the pair of interior rigid heating coil supports each have a thermal expansion coefficient (CTE). The thermal expansion coefficient of the pair of interior rigid heating coil supports is less than or equal to the thermal expansion coefficient of the exterior rigid insulator.

In some embodiments, the heating assembly includes a furnace enclosure configured to engage the interface of the fixture. The furnace enclosure includes a first opening to allow the work portion of the module to be positioned within the furnace enclosure with a non-work portion of the module connected to the work portion extending outside of the furnace enclosure. In some aspects, the furnace enclosure includes a second opening for allowing another non-work portion of the module connected to the work portion to be positioned outside of the furnace enclosure and outside of the receptacle.

By configuring the fixture in the above-referenced manner, the fixture is of a modular design adapted to facilitate treatment of a work portion of the module while protecting the non-work portion from potential damage resulting from such treatment. That is, the fixture is configured to facilitate one or more steps of a repair or treatment process of one or more components of a module of the gas turbine engine without having to disassemble the entire module. As such, in some embodiments, the module may only be mounted in the fixture once to reduce the required handling of the module or its individual components and to reduce a likelihood of damage to the module that could otherwise occur from moving the module or its individual components between sequential steps of the repair process.

The terms and expressions used herein have the ordinary technical meaning as is accorded to such terms and expressions by persons skilled in the technical field as set forth above except where different specific meanings have otherwise been set forth herein. The word "or" when used herein shall be interpreted as having a disjunctive construction rather than a conjunctive construction unless otherwise specifically indicated. The terms "coupled," "fixed," "attached to," and the like refer to both direct coupling, fixing, or attaching, as well as indirect coupling, fixing, or attaching through one or more intermediate components or features, unless otherwise specified herein.

The singular forms "a", "an", and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

The foregoing and other benefits may become clearer upon making a thorough review and study of the following detailed description.

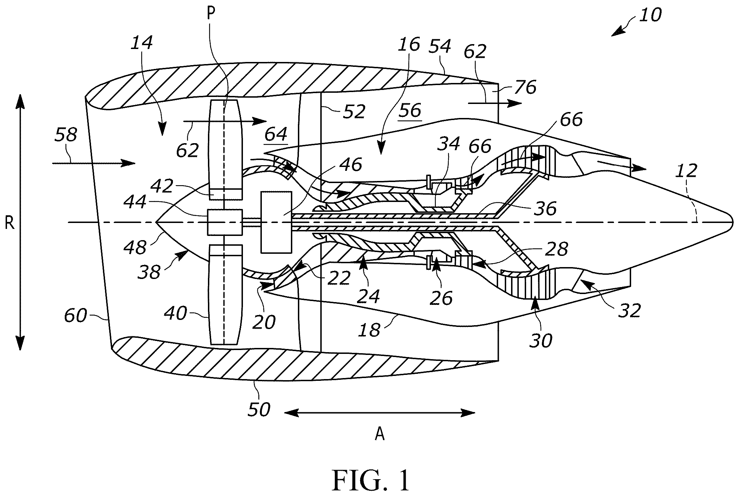

Referring now to the drawings, FIG. 1 is a cross-sectional view of a gas turbine engine. The gas turbine engine is a high-bypass turbofan jet engine, referred to herein as "turbofan engine 10." The turbofan engine 10 defines an axial direction A (extending parallel to a longitudinal centerline 12 of the turbofan engine 10 provided for reference) and a radial direction R. In general, the turbofan engine 10 includes a fan section 14 and a core turbine engine 16 disposed downstream from the fan section 14.

The exemplary core turbine engine 16 depicted generally includes a substantially tubular outer casing 18 that defines an annular inlet 20. The tubular outer casing 18 encases, in serial flow relationship, a compressor section including a low pressure (LP) compressor 22 and a high pressure (HP) compressor 24; a combustion section 26; a turbine section including a high pressure (HP) turbine 28 and a low pressure (LP) turbine 30; and a jet exhaust nozzle section 32. A high pressure (HP) shaft or spool 34 drivingly connects the HP turbine 28 to the HP compressor 24. A low pressure (LP) spool 36 drivingly connects the LP turbine 30 to the LP compressor 22.

The fan section 14 includes a variable pitch fan 38 having a plurality of fan blades 40 coupled to a disk 42 in a spaced apart manner. As depicted, the fan blades 40 extend outwardly from disk 42 generally along the radial direction R. Each of the fan blades 40 is rotatable relative to the disk 42 about a pitch axis P by virtue of the fan blades 40 being operatively coupled to a suitable actuation member 44 configured to collectively vary the pitch of the fan blades 40 in unison. The fan blades 40, disk 42, and actuation member 44 are together rotatable about the longitudinal centerline 12 by low pressure spool 36 across a power gear box 46. The power gear box 46 includes a plurality of gears for stepping down the rotational speed of the LP spool 36 to a more efficient rotational fan speed.

Referring still to the exemplary embodiment of FIG. 1, the disk 42 is covered by rotatable front hub 48 aerodynamically contoured to promote an airflow through the plurality of fan blades 40. Additionally, the exemplary fan section 14 includes an annular fan casing or outer nacelle 50 that circumferentially surrounds the variable pitch fan 38 and/or at least a portion of the core turbine engine 16. It should be appreciated that the outer nacelle 50 may be configured to be supported relative to the core turbine engine 16 by a plurality of circumferentially-spaced outlet guide vanes 52. Moreover, a downstream section 54 of the outer nacelle 50 may extend over an outer portion of the core turbine engine 16 to define a bypass airflow passage 56 therebetween.

During operation of the turbofan engine 10, a volume of air 58 enters the turbofan engine 10 through an associated inlet 60 of the outer nacelle 50 and/or fan section 14. As the volume of air 58 passes across the fan blades 40, a first portion 62 of the air 58 as indicated by arrow is directed or routed into the bypass airflow passage 56 and a second portion 64 of the air 58 as indicated by arrow is directed or routed into the LP compressor 22. The ratio between the first portion 62 of air 58 and the second portion 64 of air 58 is commonly known as a bypass ratio. The pressure of the second portion 64 of air 58 is then increased as it is routed through the HP compressor 24 and into the combustion section 26, where it is mixed with fuel and burned to provide combustion gases 66. Subsequently, the combustion gases 66 are routed through the hot flowpath, or hot-section flowpath, of the HP turbine 28 and the LP turbine 30, where a portion of thermal and/or kinetic energy from the combustion gases 66 is extracted.

The combustion gases 66 are then routed through the jet exhaust nozzle section 32 of the core turbine engine 16 to provide propulsive thrust. Simultaneously, the pressure of the first portion 62 of air 58 is substantially increased as the first portion 62 of air 58 is routed through the bypass airflow passage 56 before it is exhausted from a fan nozzle exhaust section 76 of the turbofan engine 10, also providing propulsive thrust.

It should be appreciated, however, that the exemplary turbofan engine 10 depicted in FIG. 1 is by way of example only, and that in other exemplary embodiments, aspects of the present disclosure may additionally, or alternatively, be applied to any other suitable gas turbine engine. For example, in other exemplary embodiments, the turbofan engine 10 may instead be any other suitable aeronautical gas turbine engine, such as a turbojet engine, turboshaft engine, turboprop engine, etc. Additionally, in still other exemplary embodiments, the exemplary turbofan engine 10 may include or be operably connected to any other suitable accessory systems.

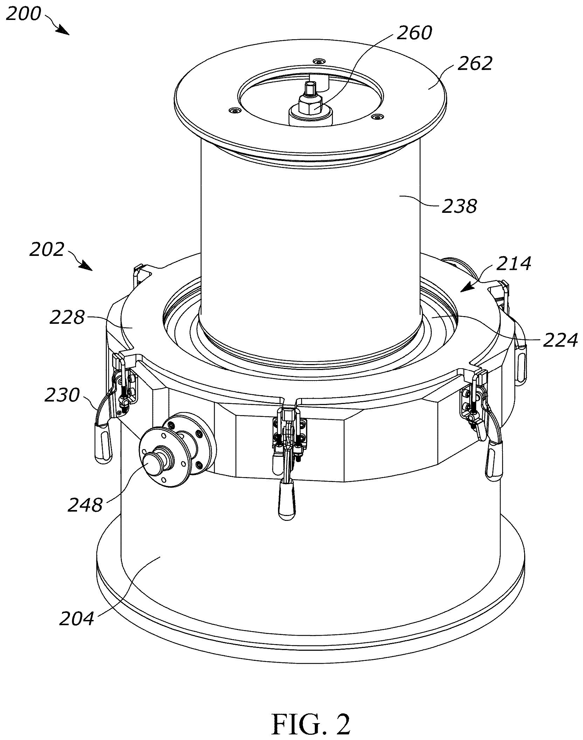

Generally speaking, the systems described herein in FIGS. 2-14 below provide a fixture than can be used to treat one or more modules of a gas turbine engine, such as the engine 10 as described above with reference to FIG. 1. For example, the systems and methods described herein can be utilized to repair one or more parts (e.g., disks, seals, blades, etc.) of one or more modules within the engine 10 (e.g., high pressure turbine 28, low pressure turbine 30, LP compressor 22, HP compressor 24, combustion section 26, etc.).

Moreover, the systems described herein provide a fixture of a modular design adapted to allow one or more different treatments on one or more components of a module. More specifically and described in greater detail below, the fixture is configured to interface with a plurality of different replaceable components for conducting different treatments of the work portion of the module. For example, the fixture is configured to be utilized with replaceable tooling to protect non-work portions of the module during removal of an existing coating and/or application of a new coating on a component of the module. The fixture is also configured to be utilized with heating assemblies and other components to support localized heat treatment of at least a work portion of the module. As such, the module may be mounted to the receptacle once while allowing a plurality of different treatments to be performed on a portion of the module.

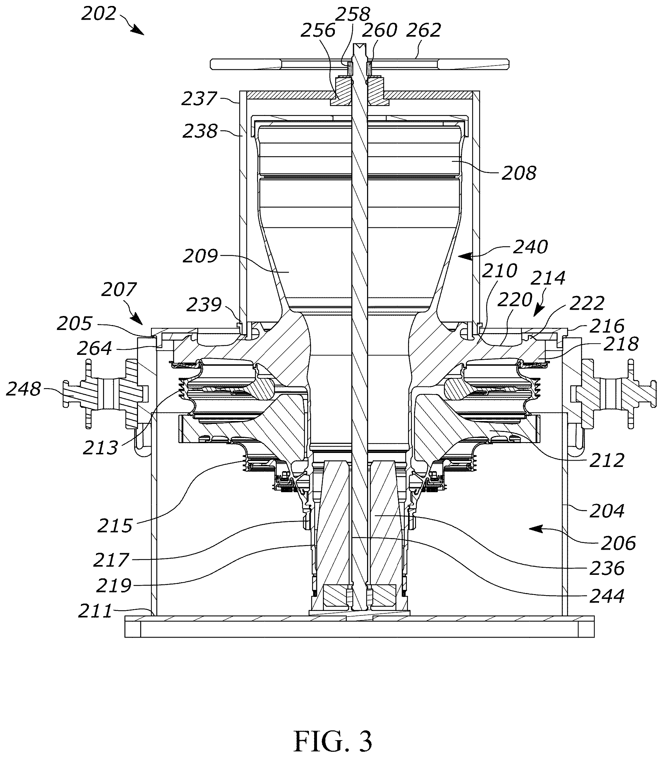

FIGS. 2 and 3 illustrates a first configuration of a system 200 for treating a module 208 of a gas turbine engine in accordance with various embodiments. The first configuration of the system 200 is adapted for allowing treatment of a work portion of the module 208, such as removal of a coating, while protecting the remainder of the module 208, i.e., the non-work portion, from foreign material. In some embodiments, the system 200 is configured for allowing removal of an anti-corrosion coating from a portion of the module. As used herein, a "module" refers to an assembly of two or more different parts.

The system 200 includes a fixture 202 having a receptacle 204. The receptacle 204 has a generally cylindrical body. It is generally contemplated that the receptacle 204 may have other shapes such as, for example, rectangular, hexagonal, octagonal, etc., and may extend a variety of axial lengths. The receptacle 204 includes a first end 205 (also referred to herein as a top end) and a second end 211 (also referred to herein as a bottom end). The receptacle 204 includes a radial sidewall that defines an interior space 206 which extends between a first end 205 and a second end 211, also referred to as top and bottom ends 205, 211, of the receptacle 204. The top end 205 of the receptacle 204 defines an opening 207 , such as, for example, a circular opening, to the interior space 206. In this manner, the receptacle 204 may receive a module 208, or at least a portion of the module 208, via the opening 207 at the top end of the receptacle 204. The module 208 is maintained in a predetermined orientation in part by a module guide 236 fixed to the bottom end of the receptacle 204. The module guide 236 has a generally cylindrical body with an upper tapered end portion that is sized and configured to be received within an interior of an aft rotor shaft portion 219 of the module 208. The module guide 236 aligns the module 208 within the interior space 206 of the receptacle 204 when the module 208 is inserted into the receptacle 204, thereby preventing contact of the module 208 with receptacle 204 during insertion. It is generally contemplated that the receptacle 204 may have a variety of sizes and shapes based on a size and geometry of the module 208 to be treated.

In the embodiment of FIGS. 2 and 3, the module 208 is a high pressure turbine module including at least one turbine disk, such as a stage one disk 210 and a stage two disk 212. The illustrated module 208 also includes a forward rotor shaft portion 209 about which the stage one disk 210 extends, a mid-seal 213 positioned between the stage one disk 210 and stage two disk 212, an aft seal 215 aft of the stage two disk 212, and an aft nut 217 mounted about an aft rotor shaft portion 219 following the stage two disk 212. However, in other embodiments, the module 208 may include a different configuration of components or may be any other module of the gas turbine engine, such as a compressor module, combustion module, a rotor module, etc. and may include any suitable number of different parts.

The fixture 202 comprises an interface 264 at the top end of the receptacle 204 configured to selectively engage with a plurality of different components (e.g., tools, equipment) for conducting or allowing for different treatments of a work portion of the module 208. In the configuration shown in FIGS. 2-5, the plurality of different components include protective barriers 214 including an upper removable cover 238 for enclosing a non-work portion 222 of the module 208 within the fixture 202 to facilitate the removal of the coating on the work portion 220 of the module 208.

The protective barriers 214 are installed adjacent to or in engagement with a top surface 216 of the receptacle 204, a radially inner portion of the stage one disk 210, and a radially outer rim portion 218 of the stage one disk 210. The protective barriers 214 define and leave exposed a work portion 220 (e.g., a coated surface to be repaired) of the module 208 to be treated and cover or otherwise inhibit passage of foreign material into or onto a non-work portion 222 (e.g., a remainder of the module that is not being treated) of the module. In other words, the protective barriers 214 allow for the only an exposed surface of the module 208 (i.e., the work portion 220) to be treated. In the embodiment of FIGS. 2 and 3, the work portion 220 is a forward web portion 224 of the stage one disk 210 and the non-work portion 222 includes the remainder of the module 208. In other embodiments, the work portion 220 may include any portion of the module 208 to be treated.

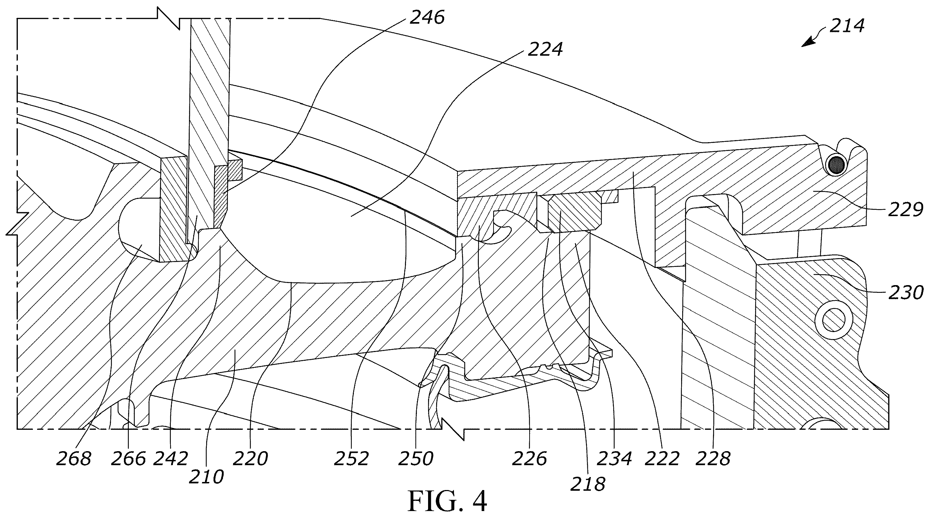

As shown in FIG. 4, the protective barriers 214 further include a radially outer resilient protective barrier 226 and a radially outer rigid protective barrier 228. In one example, the radially outer resilient protective barrier 226 may be silicon, rubber, or poly-molded masking, and the radially outer rigid protective barrier 228 may be of a metallic material such as steel or another rigid material. The radially outer resilient protective barrier 226 is positioned in engagement with the non-work portion 222 of the module 208 (e.g., on the radially outer rim portion 218) and the radially outer rigid protective barrier 228 is positioned over the radially outer resilient protective barrier 226 and biases the radially outer resilient protective barrier 226 against the radially outer rim portion 218 of the stage one disk 210. The radially outer rigid protective barrier 228 may include fastening tabs 229 that are configured to attach to a latching components of locking members 230 of the receptacle 204 (FIGS. 2 and 3). The locking members 230, such as, for example, clamps, may be selectively actuated between an engaged position and a disengaged position. When in the engaged position, the locking members 230 compress the radially outer resilient protective barrier 226 between the radially outer rigid protective barrier 228 and the radially outer rim portion 218 of the stage one disk 210 which thereby provides a seal interface between a radially outer portion of the work portion 220 and the non-work portion 222. The locking members 230 are distributed circumferentially around the receptacle 204 and engage with corresponding fastening tabs 229 to apply a circumferentially distributed force to the radially outer rigid protective barrier 228. In some forms, the seal interface may be formed between an outer rabbet 250 and the forward web portion 224 of the stage one disk 210. Accordingly, the radially outer rigid protective barrier 228 biases against and compresses the radially outer resilient protective barrier 226 to inhibit the passage of foreign material into or onto the radially outer non-work portion 222 of the module 208, thereby shielding the module 208 from foreign material such as abrasives or other contaminants that are by-products of the surface treatment process described more fully below.

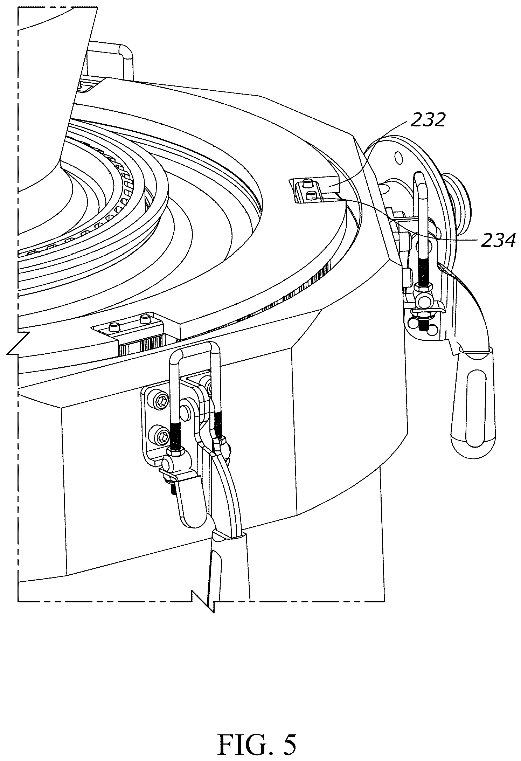

In some embodiments, the radially outer resilient protective barrier 226 may further include notches 232 (e.g., as shown in FIG. 5) formed at circumferentially spaced positions around the radially outer resilient protective barrier 226 with spacers 234 positioned on or in the non-work portion 222 and in the notches 232. The spacers 234, may be of a polymeric material, such as nylon, and are configured to limit a clamping force of the radially outer rigid protective barrier 228 on the outer rabbet 250 of the stage one disk 210 and to maintain the protective barrier 214 within a predetermined tolerance from an edge 252 of the outer rabbet 250. In some embodiments, the notches 232, spacers 234, and the fastening tabs 229 of the radially outer rigid protective barrier 228 are radially aligned with a position of the locking members 230 to limit and evenly distribute the clamping force exerted by the locking members 230 and the radially outer rigid protective barrier 228.

Referring back to FIGS. 2 and 3, the protective barriers 214 further include the upper removable cover 238 which has a generally cylindrical body. It is generally contemplated that the upper removable cover 238 may have other shapes such as, for example, rectangular, hexagonal, octagonal, etc., and may extend a variety of axial lengths based on the size of the module 208. The upper removable cover 238 includes a first end 237 (also referred to herein as a top end) and a second end 239 (also referred to herein as a bottom end). The upper removable cover 238 includes a radial sidewall that defines an interior space 240 which extends between the top end 237and the open bottom end 239 of the upper removable cover 238. The open bottom end 239 of the upper removable cover 238 is removably positioned around the module 208 with the bottom end 239 proximal to the top end 205 of the receptacle 204 and defines an opening, such as a circular opening, to the interior space 240 to cover the forward rotor shaft portion 209 of the module 208 above the top end 205 of the receptacle 204. The receptacle 204 forms a lower protective chamber and the upper removable cover 238 forms an upper protective chamber (i.e., inhibiting the passage of foreign material into or onto the non-work portion 222 of the module 208) with rigid and resilient protective barriers 214 to provide seals between the openings of the receptacle 204 and the upper removable cover 238 and the module 208 and to precisely delineate the work portion 220 of the forward web portion 224 from the remaining non-work portion 222 of the module 208.

The upper removable cover 238 is secured to the receptacle 204 and supported by a central support rod 244, such as a threaded rod or drawbar, that extends in an upright manner from the rotor mounting portion or module guide 236 along a central longitudinal axis of the module 208 and through the rotor thereof. A distal end portion of the central support rod 244 is received in and extends through a threaded through opening 256 in the upper removable cover 238. As shown in FIG. 4, when secured by the rod 244, the bottom end of the upper removable cover 238 is seated generally uniformly at a contact face of the stage one disk 210, such as the inner rabbet 242. The upper removable cover 238 further includes a recessed region at a lower edge 266 proximal to the bottom end and a radially inner rigid protective barrier 246 and a radially inner resilient protective barrier 268 positioned therein. When the upper removable cover 238 is secured via the central support rod 244, the radially inner rigid protective barrier 246 abuts an edge of the inner rabbet 242 to provide a seal between the work portion 220 and the non-work portion 222. The radially inner rigid protective barrier 246 inhibits the passage of foreign material into or onto the non-work portion 222 of the module 208 radially inward of the work portion 220. Accordingly, the radially inner rigid protective barrier 246 and the radially outer rigid protective barrier 228 together define an opening to allow access to the work portion 220 of the module 208, thereby shielding the module 208 from contaminants formed as by-product of the surface treatment process described more fully below.

As shown in FIG. 3, in some embodiments, a flat washer 258 and a hex nut 260 may be threadedly coupled to a top end of the rod 244 to secure the upper removable cover 238 to the fixture 202 with the upper removable cover 238 fully circumferentially seated along the edge of the inner rabbet 242 (FIG. 4). In some embodiments, the upper removable cover 238 further includes an annular handle or clamp plate 262. The clamp plate 262 is coupled to the top end of the upper removable cover 238 for selectively positioning the upper removable cover 238 with respect to the module 208 and rotating the upper removable cover 238 about the central support rod 244 to secure the upper removable cover 238 in a correct longitudinal position therealong.

In some embodiments, the protective barriers 214 may further include sheet-like materials and adhesive barriers such as tape and the like. The adhesive barriers (e.g., adhesive tape) may be installed on a longitudinally extending portion of the outer rabbet 250 at an interface with the generally radially extending forward web portion 224. For example, the adhesive barrier may be installed with a tolerance in the range of about 0.01 inches to about 0 inches short of the interface therebetween such that a portion of the longitudinally extending portion of the outer rabbet 250 is exposed to ensure all of the coating of the forward web portion 224 is removed at a radially outer edge thereof. In some embodiments, a borescope may be used to verify definition of the work portion 220 and the non-work portion 222 and that the size and dimension of the work portion 220 is within the defined tolerances.

As shown in FIGS. 2 and 3, in some embodiments, the receptacle 204 further includes lifting members 248 such as, for example, trunnions. The lifting members 248 may be positioned at circumferentially distributed positions around the circumference of the receptacle 204 and extend radially outward from an outer surface thereof. The lifting members 248 are designed such that a lifting fixture, such as, for example, a trunnion lifting fixture, may engage with the lifting members 248 and support the receptacle 204 during a lifting operation to allow for the fixture 202 to be moved between different work areas of a workshop. In one example, the lifting operation may be used to position the receptacle 204 on a rotary table for a repair process (e.g., coating removal or coating treatment) prior to the module 208 being inserted or may be used to lift and invert the fixture 202 after the module 208 is inserted such that the clamp plate 262 is positioned at the bottom of the fixture 202. In another example, the lifting operation may be used to position the receptacle 204 on a cart, such as a push cart, to allow the fixture 202 to be moved between different areas of a workshop to allow different treatments to be conducted while retaining the module 208 securely in the fixture 202.

As stated above, the system 200, and in particular, the fixture 202 is adapted for allowing treatment of the work portion 220 of the module 208, while protecting the non-work portion 222 of the module 208 via the protective barriers 214. The treatment processes may include impacting the surface with an abrasive material, such as by grit blasting, dry ice blasting, or thermally-assisted dry ice blasting, as well as applying a chemically active material to the surface of the work portion 220 and/or cleaning the surface of the work portion 220 to prepare for application of a new coating. In some embodiments, different treatment processes may require modification to the size and/or geometry of the work portion 220. For example, for a coating removal process, it may be necessary to define the border of the work portion 220 with one or more additional protective barriers, such as the adhesive barriers, to be slightly larger (i.e., under-masking) to ensure that the entire desired portion of the coating is removed. In some embodiments, the receptacle 204 may include one or more nozzles fluidly coupled to a pressurized gas source, such as an air compressor to pressurize the interior space 206 of the receptacle 204 to further inhibit the passage of foreign material into or onto the non-work portion of the module 208 during the treatment process.

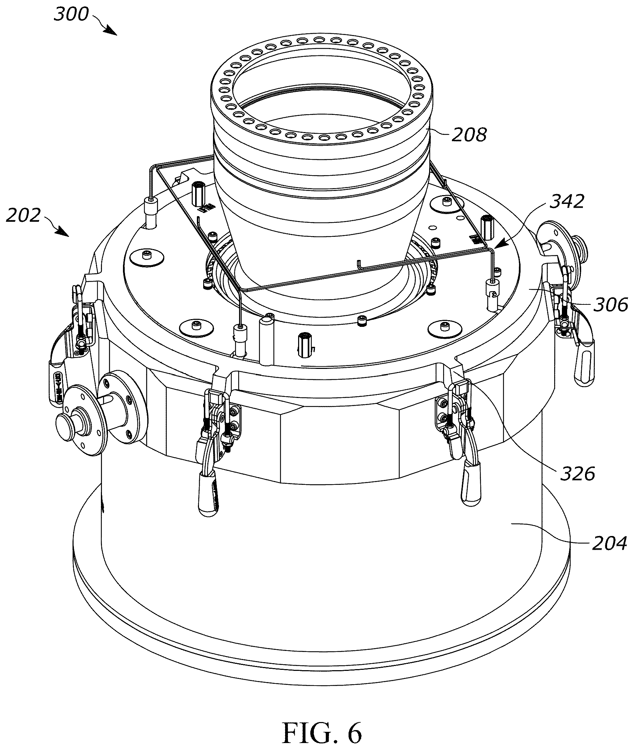

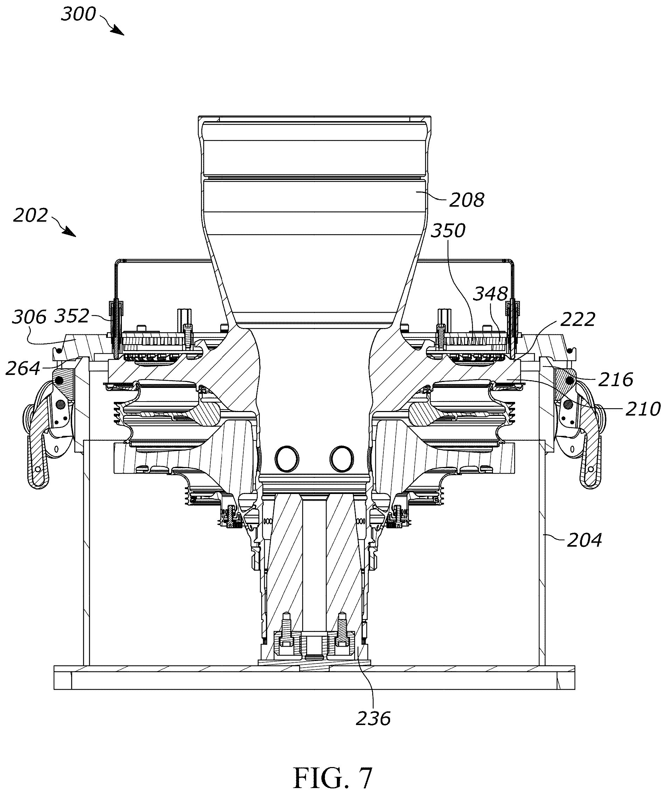

In some embodiments, after the coating removal and/or surface preparation process described above, a coating application process may be conducted to apply a new coating to the work portion 220 while at least a portion of the module 208 remains in the fixture 202. In some embodiments, a portion, or all of the protective barriers 214 may be removed from the module 208 and additional protective barriers (e.g., adhesive barriers or plastic sheeting) may be installed on the module 208 prior to the new coating being applied. Then, one or more additional protective barrier components may be installed on the module 208, while at least a portion of the module 208 remains in the fixture 202, as described with respect to the second configuration of the system 200 in FIGS. 6 and 7 below.

FIGS. 6 and 7 illustrate a second configuration of a system 300 for treating the module of the gas turbine engine in accordance with various embodiments. The second configuration of the system 300 is configured for curing a coating on the portion of the module. In some embodiments, the system 300 is configured for heat treating a portion of the module, such as heating an anti-corrosion coating on a portion of the module to cure the coating.

The system 300 includes the fixture 202, which is the same fixture used as in the configuration of FIGS. 2-5. In other words, the fixture 202 may be used to first prepare the work portion 220 for treatment (e.g., by removing the coating and/or cleaning the surface of the work portion 220). Then, the tooling components (e.g., protective barriers 214 including upper removable cover 238, etc.) of the fixture 202 used for removing a coating and/or preparing a surface of the work portion 220 may be removed and subsequently heat treatment tooling components (e.g., the mounting ring 306 and the heating assembly 342) may be installed on the interface 264 of the fixture 202 to apply heat to the work portion as described more fully below. In this manner, the module 208 is only loaded in the receptacle 204 once to reduce the likelihood of damage that can occur when moving the module 208 between sequential steps in the repair process.

The fixture 202 comprises the interface 264 at the top end of the receptacle 204 configured to selectively engage with a plurality of different components for conducting different treatments of a work portion of a module. The plurality of different components in the configuration of FIG. 6 include a mounting ring 306 and a heating assembly 342 to enable the fixture 302 to facilitate the application of heat to the work portion of the module, such as for curing a newly-applied coating.

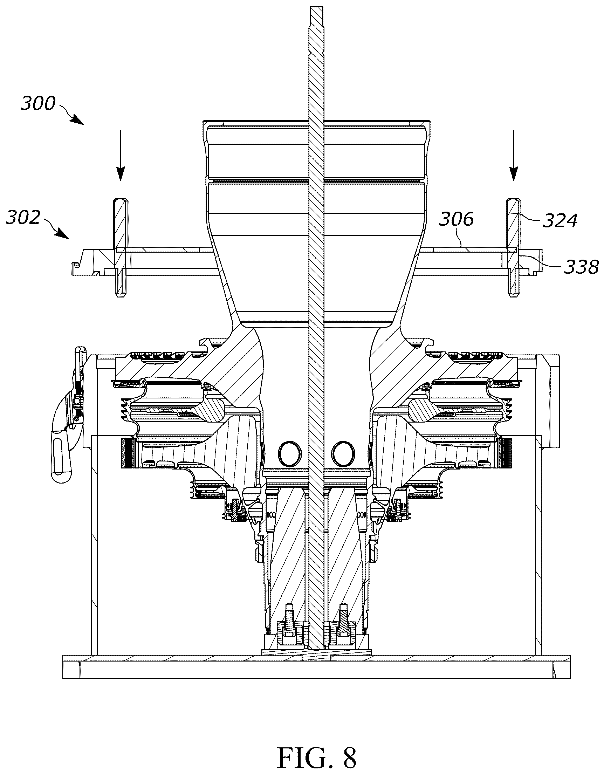

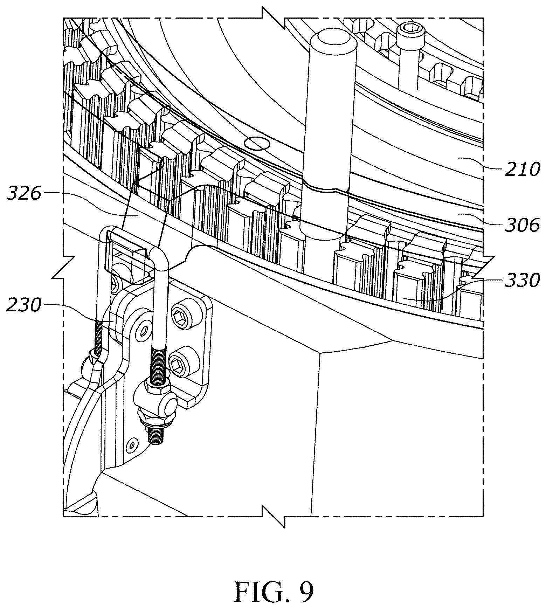

The mounting ring 306 extends about a portion of the module 208 at the interface 264 at the top end of the receptacle 204. More specifically, the mounting ring 306 is installed on a top surface of the receptacle 204 about the radial sidewall. The mounting ring 306 may include alignment features and locking features to selectively position the mounting ring 306 on the top surface of the receptacle 204 and releasably couple the mounting ring 306 in place. In one form, the alignment features include alignment members, such as alignment rods 324 (FIG. 8) and locking members, such as fastening tabs 326. In some embodiments, as shown in FIGS. 8-9, the alignment rods 324 are inserted through a through opening 338 of the mounting ring 306 and the mounting ring 306 is lowered onto the receptacle 204 such that the alignment rods 324 extend proximally from the mounting ring 306 and pass through disk dovetails 330 in the stage one disk 210 to align the fastening tabs 326 with the latching components of the locking members 230 of the receptacle 204. As shown in FIG. 9, when in the engaged position the locking members 230 are coupled to the fastening tabs 326 to secure the mounting ring 306 in place with respect to the receptacle 204 of the fixture 202. In some embodiments, the alignment rods 324 may be removed from the mounting ring 306 after the mounting ring 306 is secured in place.

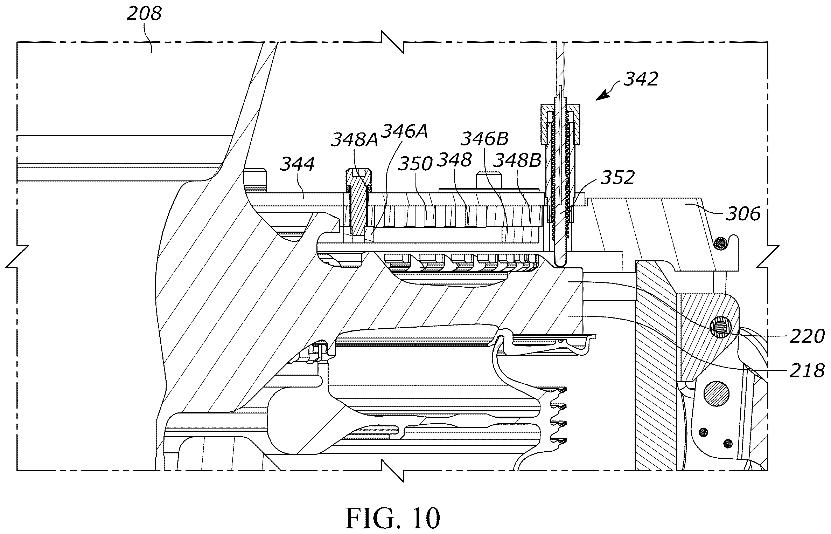

As shown in FIG. 10, the heating assembly 342 in some embodiments includes an annular exterior rigid insulator 344, a pair of radially spaced-apart annular rigid heating coil supports 346A, 346B, and an insulative mat 348 having a heating coil 350 integrated therewith. The exterior rigid insulator 344 is supported on a radially inner ledge of the mounting ring 306, which thereby enables the insulative mat 348 and heating coil 350 to be suspended over the work portion 220 of the module 208 at a predetermined vertical distance therefrom. The insulative mat 348 and the heating coil 350 are held in place between the exterior rigid insulator 344 and the spaced-apart rigid heating coil supports 346. In this manner, the insulative mat 348 and the heating coil 350 are spaced-apart from the work portion 220 of the module 208 to uniformly heat the work portion 220 and limits heating of the non-work portion of the module 208.

Generally, during operation, the heating assembly 342 is configured to locally heat the work portion 220 of the module 208 to a required temperature, such as temperatures greater than 500 ºF to locally cure the coating on the work portion 220. As such, the exterior rigid insulator 344 may comprise a thermally resistant material. In one example, the exterior rigid insulator 344 may comprise mica board including layers of muscovite or phlogopite mica paper, bonded with silicone or epoxy resin and heat-pressed. Other thermally resistant materials may also be used. Additionally, the pair of spaced-apart rigid heating coil supports 346A, 346B may comprise a metallic material. In one example, the pair of spaced-apart rigid heating coil supports 346 may comprise a nickel-iron alloy material, such as Invar-36. Other suitable materials may also be used. It is generally contemplated that the pair of spaced-apart rigid heating coil supports 346A, 346B are formed of a material with a coefficient of thermal expansion (CTE) that is generally the same as or less than the CTE of the exterior rigid insulator 344. In some embodiments, the CTE of the metallic material of the pair of spaced-apart rigid heating coil supports 346A, 346B has a CTE in the range of 50% less than to 50% greater than the CTE of the thermally resistant material of the exterior rigid insulator 344. In this manner, any relative movement or warping caused by dissimilar amounts of expansion of the exterior rigid insulator 344 and the pair of spaced-apart rigid heating coil supports 346 during the heating process may be reduced or eliminated. Moreover, using materials with similar CTE inhibits movement of the insulative mat 348 and the heating coil 350 caused by dissimilar amounts of expansion of the exterior rigid insulator 344 and the pair of spaced-apart rigid heating coil supports 346A, 346B.

In some embodiments, the heating coil 350 is a spiral wound heater coil wire that is integrated with or encapsulated in the insulative mat 348. In some forms, upper and lower layers 348A, 348B of the insulative mat 348 are sewn or otherwise joined together in between each adjacent loop of the heating coil 350 to prevent adjacent loops of the heating coil 350 to come into contact with one another.

In some embodiments, the heating assembly 342 further includes a plurality of temperature sensors 352. In one form, the plurality of temperature sensors 352 may include thermocouples. The plurality of temperature sensors 352 are inserted via through openings in the exterior rigid insulator 344 and are in direct contact with the non-work portion 222 of the module 208 to measure a temperature of the non-work portion 222. The plurality of temperature sensors 352 may be operably connected to a controller (e.g., controller 406 in FIG. 10) configured to control a heat output of the heating coil 350 based on feedback from the plurality of temperature sensors 352. For example, the controller 406 may use the detected temperature of the non-work portion adjacent to the work portion to determine an approximate corresponding temperature of the work portion during heat treatment of an applied coating on the work portion. In some embodiments, the heating assembly 342 may include only one temperature sensor, and in other embodiments can include multiple temperature sensors.

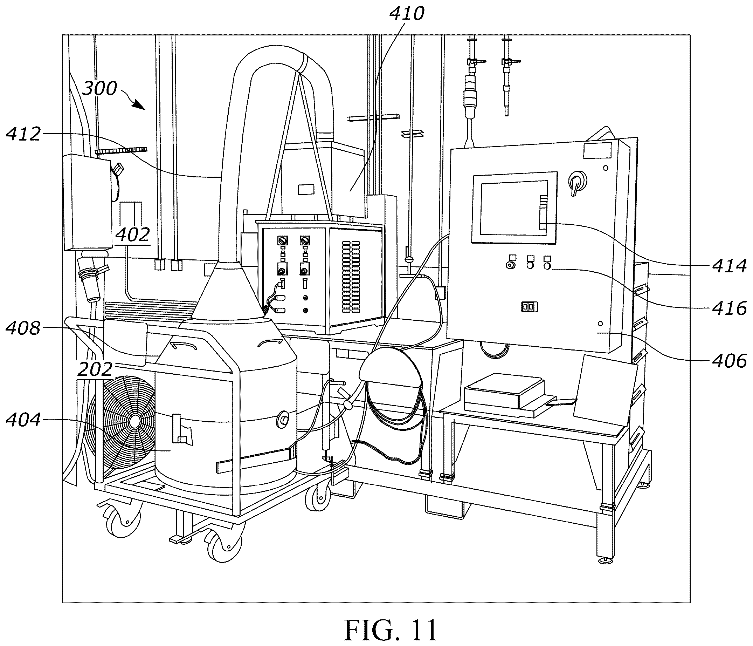

In some embodiments, as shown in FIG. 11, the system 300 for treating the module further includes an extraction system 402, thermal blankets 404, and a controller 406. The extraction system 402 includes a fume extractor hood 408 operably coupled to a filtration unit 410 via a conduit 412. The fume extractor hood 408 is placed over a top end of the fixture 202 for extracting fumes from the fixture 202 that may form during the heat treatment process when the heating assembly 342 is operated to locally heat the work portion 220 and directing the extracted fumes to the filtration unit 410 for processing. Additionally, the extraction system 402 may also include one or more sensors, such as flow sensors, air flow devices, conduits, fans, pumps, etc.

The thermal blankets 404 are operably coupled around the fixture 202 to retain the heat in the fixture 202 during the heat treatment process when the heating assembly 342 is operated to locally heat the work portion 220. By effectively insulating the fixture 202, the thermal blankets 404 minimize heat loss from the fixture 202 which thereby improves the heat uniformity and temperature control locally about the work portion 220. This improved thermal retention also allows the heating assembly 342 to operate at lower duty cycles, reducing the overall power consumption and increasing the energy efficiency of the fixture 202.

The controller 406 is operably coupled to the heating assembly 342, the plurality of temperature sensors 352, and the extraction system 402 for controlling a heat treatment process on the work portion of the module 208. In some embodiments, the controller 406 may be configured as a closed-loop feedback controller configured to monitor an output of one or more components and automatically adjust an input of the one or more components to accurately apply and track a heat cycle during the heat treatment process. In one example, a first feedback loop in the controller 406 monitors feedback (e.g., sensed signals or data) from the plurality of temperature sensors 352 and controls a heat output of the heating assembly 342 based on the monitored feedback to maintain one or more predetermined set temperatures during the localized heating of the work portion 220 of the module 208. Additionally, one or more feedback loops of the controller 406 may be used to monitor and control operation of the extraction system 402, which may include monitoring a temperature within the interior space 206 of the fixture 202 or of other components of the module 208, and automatically adjusting an input to the extraction system 402, such as air flow parameters based on the monitored feedback. The controller 406 may be further configured to control other aspects of the heat treatment process.

The controller 406 may include a processor in communication with memory. The processor may execute electronic instructions stored in the memory to carry out one or more of the steps, actions, and/or functions described herein to operate the heating assembly 342 and extraction system 402 as described herein. The processor may also execute electronic instructions stored in the memory to control other operations of the system 200. The processor may be any suitable processing device such as a microprocessor, an application-specific integrated circuit (ASIC), or a field programmable gate array (FPGA). The memory is any memory or medium suitable for storing executable instructions, data, and/or data structures such as a random access memory (RAM), a read only memory (ROM), an electronically erasable programmable read only memory (EEPROM), or other non-transitory computer media such as a flash memory device, or an optical storage medium. The controller 406 may further include an interface 414, such as, for example, a display or other human machine interface, and one or more operator inputs such as, buttons 416, a touch screen, track ball, keyboard, mouse, etc. In some embodiments, the controller 406 may display the monitored feedback on the interface 414.

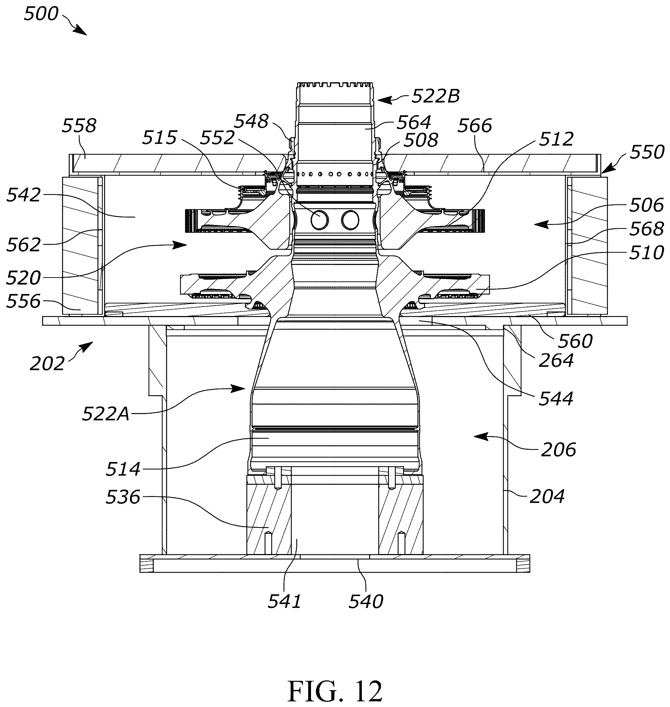

FIG. 12 illustrates another configuration of a system 500 for treating a module of the gas turbine engine in accordance with various embodiments. In some embodiments, the system 500 is configured for heat treating a portion of the module, such as heating an anti-corrosion coating on a portion of the module to cure the coating.

In the embodiment of FIG. 12, an alternate heating assembly is shown in the form of a furnace enclosure 542 for heating a portion of the module 508. In this form, the work portion 520 may include additional components beyond the work portion 220 described above with respect to FIGS. 2-11. The module 508 is a high pressure turbine module similar to module 208 having an assembly of different parts including at least one turbine disk, such as a stage one disk 510 and a stage two disk 512, a rotor 514 and an aft nut 548. However, in other embodiments, the module 508 may comprise a different assembly of components of the high pressure turbine module or be any other module of the gas turbine engine, such as a low pressure turbine module, a compressor module, a combustion module, a rotor module, etc. and may include any number of different parts.

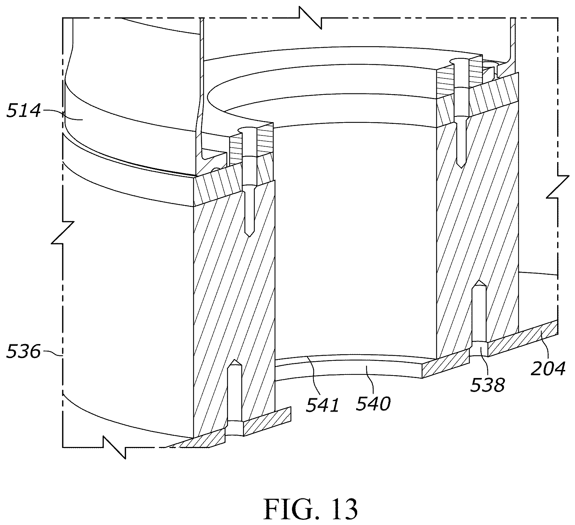

The module 508 is located and supported within the interior space 206 of the receptacle 204 by an annular rotor mounting portion 536 mounted to the base of the fixture 202 for supporting a forward portion of the rotor 514. The forward portion of rotor 514 of the module 508 is mounted on the rotor mounting portion 536 such that the module 508 is supported by the rotor mounting portion 536 in a predetermined orientation that prevents contact of the module 508 with receptacle 204. In contrast to the first and second configuration as shown in FIGS. 2-10 above, the module 508 is inverted with the forward portion of the rotor 514 mounted to the base of the fixture 202. The rotor mounting portion 536 may be coupled to the receptacle 204 via threaded fasteners received in through openings 538 as shown in FIG. 13. In some embodiments, a top wall 566 of the furnace enclosure 542 is removable to allow the module 508 to be inserted into the furnace enclosure 542 and to allow the forward rotor shaft portion 514 to be inserted through the opening 544 to be mounted to the rotor mounting portion 536. The rotor mounting portion 536 further includes an opening 541, coaxially aligned with an opening 540 of the receptacle 204 for facilitating a flow of air through a bore of the rotor 514. In some embodiments, the rotor mounting portion 536 may facilitate the flow of air through the bore of the module 508 and into a furnace enclosure 542 through one or more openings 552 in the module 508 to promote uniform heating of the work portion 520 of the module 508 within the furnace enclosure 542.

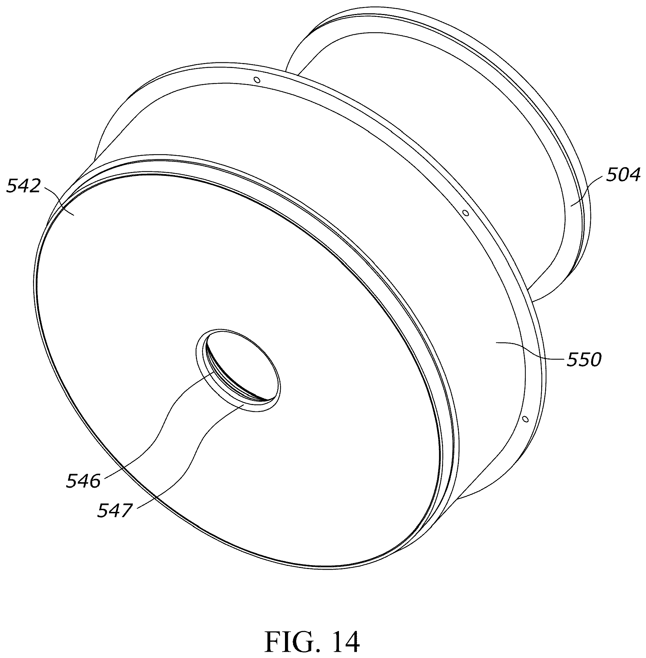

The furnace enclosure 542 is configured to engage an interface 264 of the receptacle 204 to be supported thereby. The furnace enclosure 542 includes a first opening 544 to allow a work portion 520 of the module 508 to be positioned within the furnace enclosure 542 and a non-work portion 522A of the module 508 to extend outside of the furnace enclosure 542 and within an interior space 206 of the receptacle 204. In some embodiments, the furnace enclosure 542 further includes a second opening 546 to allow for another non-working portion 522B to connected to the work portion 520 to be positioned outside of the furnace enclosure 542 and the receptacle 504 as shown in FIG. 14. In the disclosed embodiment, the work portion 520 is positioned within the furnace enclosure 542 and includes the stage one disk 510, the second stage disk 512, and aft seal 515, while a first non-work portion 522A at a forward part of the module 508 includes the forward rotor portion514 and the a second non-work portion 522B at an aft portion of the module 508 includes an aft rotor shaft portion 564 and aft nut 548 of the module 508. In this manner, parts of the module 508 that may be sensitive to the temperatures used in the heat treatment process, such as the aft nut 548, are located outside of the furnace enclosure 542 and/or the fixture 202.

The furnace enclosure 542 further includes insulation for retaining heat therein, such as a plurality of insulative mats or panels 550. In some embodiments, the plurality of insulative mats or panels 550 may include a first insulative mat 556 coupled to a sidewall 568 of the furnace enclosure 542, a second insulative mat 558 coupled to a top wall 566 of the furnace enclosure 542, and a third insulative mat 560 coupled to an inner surface of the furnace enclosure 542 at the bottom end. The second insulative mat 558 may define a third opening 547 smaller than the second opening 546 of the top wall 566 to allow the aft rotor shaft portion 564 to extend therethrough. The third insulative mat 560 may abut the stage one disk 510 proximally adjacent the opening 544 and may define a fourth opening 549 smaller than the opening 544 to insulate the furnace enclosure 542 to retain heat therein. The furnace enclosure 542 includes resistive heating elements 562 extending about sidewall 568 to heat the interior space 506 of the furnace enclosure 542 and the work portion 520 of the module 508 positioned therein. In some embodiments, the furnace enclosure 542 may be controlled by the controller 406 in a similar manner as described above with regard to FIG. 10. Additionally, the extraction system 402 may also be used therewith to evacuate fumes from the furnace enclosure 542 and from around the module 508.

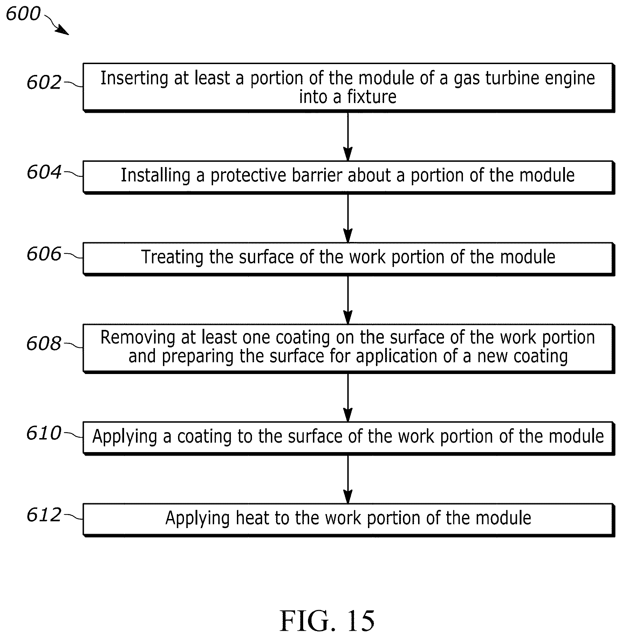

FIG. 15 illustrates a method 600 for treating a module in accordance with various embodiments. The method 600 may be performed using the system 200 according to the first configuration of FIGS. 2-5, the system 300 according to the second configuration of FIGS. 6-11, and/or the system 500 according to the third configuration of FIGS. 12-14. Although the following description of the method 600 is described in a particular order, which represents a particular embodiment, it should be noted that the steps of the method 600 may be performed in any suitable order. Further, certain steps may be repeated or skipped altogether, and additional steps may be included.

At step 602, at least a portion of the module 208 of a gas turbine engine is inserted into a fixture 202. In other embodiments, the module may be any other module of the gas turbine engine. The fixture 202 includes a receptacle 204 defining an opening 207 and an interior space 206 configured for receiving at least a portion of the module 208 in the interior space 206, and a module guide 236 configured to hold the module 208 in a predetermined orientation with at least a portion of the module 208 positioned within the interior space 206. The module guide 236, or in some embodiments rotor mounting portion 536, may further facilitate the alignment of the module 208 within the interior space 206 when the module 208 is inserted into the receptacle 204.

In some embodiments, a plurality of turbine blades of the module 208 are removed from the module 208 prior to the module 208 being inserted into the fixture 202. For example, the plurality of turbine blades of the module 208 may be removed from a plurality of circumferentially spaced slots between adjacent disk dovetails 330 of the stage one disk 210 and stage two disk 212 that selectively receive a root portion of the turbine blades prior to the high pressure turbine module 208 being inserted into the fixture 202. Other components of the module 208 may also be removed to facilitate treatment of the work portion.

At step 604, one or more protective barriers 214 are installed about a portion of the module 208 to define and leave exposed the work portion 220 of the module 208 to be treated. The protective barriers 214 are installed about a radially inner portion of the module 208 and a radially outer portion of the module 208 to form a radially inner seal interface and a radially outer seal interface, respectively. As described above, the protective barriers 214 may include rigid protective barriers and resilient protective barriers, as well as sheet-like materials and adhesive barriers such as tape and the like. The protective barriers 214 may also be formed using additive manufacturing techniques. In some embodiments, the work portion 220 may include a forward web portion 224 of a stage one disk 210 of the module 208, such as a high pressure turbine module.

In some embodiments, the protective barriers include 214 a radially outer resilient protective barrier 226, a radially outer rigid protective barrier 228, and an upper removeable cover 238. The radially outer resilient protective barrier 226 is first installed on or in a radially outer non-work portion 222 of the module 208. For example, the radially outer resilient protective barrier 226 may be installed on the radially outer rim portion 218 of the stage one disk 210 of the module 208. Next, the radially outer rigid protective barrier 228 is then installed over the radially outer resilient protective barrier 226 and the radially outer resilient protective barrier 226 is compressed against the non-work portion 222 of the module 208 with the radially outer rigid protective barrier 228 to form the radially outer seal interface between the work portion 220 and the non-work portion 222 of the module 208. For example, the radially outer seal interface may be formed between the forward web portion 224 and an outer rabbet 250 of the stage one disk 210.

Additionally, the upper removeable cover 238 is installed prior to, concurrently with, or after the radially outer resilient protective barrier 226, and the radially outer rigid protective barrier 228 are installed. The upper removable cover 238 may be lowered over a portion of the module 208 using a lifting mechanism (e.g., an overhead hoist) such that a lower edge 266 of the upper removable cover 238 forms, along with additional protective barriers such as a radially inner resilient protective barrier 268 and a radially inner rigid protective barrier 246, the radially inner seal interface on the stage one disk 210 between the work portion 220 and the non-work portion 222 of the module 208. For example, the radially inner seal interface may be formed at an interface between the inner rabbet 242 and the forward web portion 224 of the stage one disk 210. The combination of the radially inner resilient and rigid protective barrier 268, 246 form the radially inner seal and the radially outer resilient protective barrier 226 and radially outer rigid protective barrier 228 form a radially outer seal for inhibiting the passage of foreign material into or onto the non-work portion 222 of the module 208 at both a radially inner and outer portion of the annular work portion 220, thereby shielding the non-work portion 222 of the module 208 from foreign material and contaminants formed as a by-product of the surface treatment described in step 606 below.

In some embodiments, a borescope is inserted into an opening of the fixture 202 to visually inspect the interface or interfaces between the protective barriers 214 and the work portion 220 of the module 208 and verify definition of the work portion 220 and the non-work portion 222. For example, the borescope may be used for fine tuning of the position of one or more protective barriers 214 to ensure compliance with design specifications and tolerances of the treatment process. In some embodiments, different treatment processes may require modification to the size and/or geometry of the work portion 220. For example, for a coating removal process, it may be necessary to define the border of the work portion 220 with one or more protective barriers 214 to be slightly larger (i.e. under-masking) to ensure that the entire desired portion of the coating is removed, such as by abrasive blasting or by applying a chemically active material to the coating. Then, after the initial coating is removed, the border of the work portion 220 may be defined to be slightly smaller (i.e., over-masking) such that the new coating is not applied to portions of the module 208 that should be free of a coating. For this purpose, the borescope may be used to verify and fine tune the positioning of the protective barrier(s) 214 such that the position of the interface between the work-portion 220 and non-work portion 222 is positioned according to design specifications within a predetermined tolerance. For example, as shown in FIG. 4, for purposes of ensuring all of the coating of the forward web portion 224 is removed at a radially outer edge of thereof, a resilient protective barrier, such as an adhesive tape, may be installed on a longitudinally extending portion of the outer rabbet 250 at an interface with the generally radially extending forward web portion 224 with a tolerance in the range of about 0.01 inches to about 0 inches short of the interface therebetween such that a portion of the longitudinally extending portion of the outer rabbet 250 is exposed and part of the work portion 220 subject to the surface treatment described in step 606 below. As such, the borescope may be used to visually fine tune and verify the positioning of the protective barrier on the outer rabbet 250 such that the designed tolerance between the protective barrier and the edge of the outer rabbet is achieved. After the coating is removed as described below, portions of the protective barriers 214, such as the adhesive tape positioned on the outer rabbet 250, may be removed and new protective barriers 214, such as adhesive tape, may be positioned to extend beyond the longitudinally extending portion of the outer rabbet 250 onto an arcuate transition portion onto the forward web portion 224 to cause the work portion 220 for purposes of removing a coating to be slightly smaller than the work portion 220 for purposes of applying a new coating.

In some embodiments, the interior space 206 of the receptacle 204 is pressurized prior to the surface of the work portion 220 of the module 208 being treated to further inhibit the passage of foreign material into or onto a non-work portion 222 of the module 208.

At step 606, a surface of the work portion 220 of the module 208 is treated while the module remains in the fixture 202 to remove an existing coating on the surface of the work portion 220 and/or clean the surface of the work portion 220. For example, the surface of the work portion 220 may be treated to remove at least one coating from the work portion 220 (e.g., an anti-corrosion coating) and prepare the surface of the work portion 220 for application of a new coating (e.g., a new anti-corrosion coating) as described at step 608 below. In some embodiments, the work portion 220 is treated by impacting the surface of the work portion 220 with an abrasive material propelled by a pressurized gas, such as grit blasting, dry ice blasting, or thermally assisted dry ice blasting. Other treatment processes may also be used, including application of a chemically active material, such as a stripping agent. Accordingly, the at least one coating can be removed locally from the work portion 220 of the module, while the protective barrier(s) 214 inhibits the non-work portion 222 from being treated by the abrasive or chemically active material and also inhibits the passage of foreign material (e.g., the abrasive media, chemically active materials or the removed coating, such as an anti-corrosion coating) onto or into the non-work portion 222 of the module 208 to prevent contamination or fouling of the module 208. Additionally, or alternatively, a chemically active material may be applied to the surface of the work portion 220 before the surface has been impacted to clean the surface. In some embodiments, the work portion 220 is treated by cleaning the surface of the work portion 220 using, for example, over spray without removing the existing coating.

At step 608, at least one coating on the surface of the work portion 220 is removed or cleaned and the surface of the work portion 220 is prepared for application of a new coating. In some embodiments, a chemically active material may be applied to the surface of the work portion 220 to prepare the surface of the work portion 220 for application of the new coating. For example, the chemically active material may include alcohol, acetone, or the like. In some embodiments, a vacuum device may be used to clean the surface of the work portion 220.

At step 610, a coating is applied on the surface of the work portion 220 of the module 208 while at least a portion of the module 208 remains in the fixture 202. The coating may be an anti-corrosion coating applied on the surface of the work portion 220 using any suitable method. In some embodiments, at least a portion of the protective barrier 214 is removed from the module 208 and additional protective barriers may be installed prior to the coating being applied. For example, one or more of the resilient protective barriers may be removed and additional resilient protective barriers, such as adhesive tape and/or plastic sheeting may be installed prior to the coating being applied.

In some embodiments, a borescope is reinserted into the opening 207 of the fixture 202 to verify and fine tune the positioning of the protective barrier 214 after the surface of the work portion 220 is treated and prior to a new coating being applied. In this manner, the position of the protective barrier214 may be adjusted with respect to the interface between the work portion 220 and the non-work portion 222 to achieve over- or under- masking as described above.

At step 612, heat is applied to at least the work portion 220 of the module 208 while at least a portion of the module 208 remains in the fixture 202. To heat to the work portion 220 of the module 208, in some embodiments, a heating assembly 342 having an annular shape is installed adjacent to the work portion 220 while at least a portion of the module 208 remains in the fixture 202. As stated above, the heating assembly 342 is configured to apply heat locally to the work portion 220 of the module 208 without applying heat to the non-work portion 222 of the module 208. In some embodiments, the heating assembly 342 may have the form of furnace enclosure 542 as described in greater detail above. In some embodiments, the heating assembly 342 includes an insulative mat 348 having a heating coil 350 integrated therewith. Additionally, an exterior rigid insulator 344 and a pair of spaced-apart rigid heating coil supports 346 are installed and supported by the exterior rigid insulator 344 such that the insulative mat 348 and the heating coil 350 are spaced-apart from the work portion 220 of the module 208 to locally and uniformly apply the heat to the work portion 220 of the module 208.

In some embodiments, temperature sensors 352 are inserted via through openings in the exterior rigid insulator 344. In some embodiments, a borescope may be reinserted into the fixture 202 through the through openings to visually inspect (e.g., with the borescope) the alignment of the heating assembly 342, or may be used after the temperature sensors 352 are installed to visually inspect that the temperature sensors 352 are fully contacting the non-work portion 222 of the module 208.

In other embodiments, a furnace enclosure 542 is installed and supported by the interface 264 of the fixture 202. The furnace enclosure 542 includes insulation, such as a plurality of insulative mats or panels 550 and resistive heating elements 562 to heat the work portion 520 of the module 508.

In some embodiments, an extraction system 402, thermal blankets 404, and a controller 406 may be coupled to the fixture 202 prior to the heat being applied to the work portion 220 of the module 208.

In some embodiments, the non-work portion 222 of the module 208 is cooled while heat is applied to the work portion 220 of the module 208, such as by circulating air into a rotor of the module 208 or into the interior space of the fixture. In other embodiments, particular components of the non-work portion can be locally cooled, such as by cooling coils through which chilled water or another fluid is circulated.

As described above, the various aspects of the present disclosure may be employed with a fixture including a receptacle defining an opening and an interior space configured for receiving at least a portion of the module and an interface configured to selectively engage with a plurality of different components for use in conducting different treatments of a work portion of the module. The approaches described herein allow for one or more treatments of a component or a surface thereof at a module level, without requiring removal of the component from the module. Advantageously, the same fixture can be used for each of a plurality of different treatments so that the module need not be removed from the fixture to accomplish each of the plurality of different treatments.

Further aspects of the disclosure are provided by the subject matter of the following clauses:
A method for treating a module of a gas turbine engine, the method comprising: inserting at least a portion of the module of the gas turbine engine into a fixture; wherein the module comprises an assembly of different parts; wherein the fixture comprises a receptacle defining an opening and an interior space configured for receiving at least a portion of the module in the interior space; wherein the fixture is configured to hold the module in a predetermined orientation with at least a portion of the module positioned in the interior space; and treating a surface of a work portion of the module while the module remains in the fixture.

The method of any preceding clause, wherein the module of the gas turbine engine is a high pressure turbine module.

The method of any preceding clause, wherein the work portion comprises a forward web portion of a stage one disk of the high pressure turbine module.

The method of any preceding clause, further comprising installing a protective barrier about a non-work portion of the module to define and leave exposed the work portion of the module to be treated, the protective barrier defining an opening in the fixture to allow access to the work portion, the protective barrier being configured to inhibit passage of foreign material into or onto a remaining non-work portion of the module.

The method of any preceding clause, further comprising inserting a borescope in the opening of the fixture and visually inspecting with the borescope an interface between the protective barrier and the work portion of the module to be treated to verify definition of the work portion and non-work portion.

The method of any preceding clause, further comprising removing a plurality of turbine blades from the high pressure turbine module prior to inserting the module into the fixture.

The method of any preceding clause, wherein the high pressure turbine module comprises at least one turbine disk.

The method of any preceding clause, wherein treating the surface of the work portion of the module comprises impacting the surface of the work portion with an abrasive material.

The method of any preceding clause, wherein impacting the surface with an abrasive material comprises grit blasting, dry ice blasting, or thermally-assisted dry ice blasting.

The method of any preceding clause, wherein treating the surface of the work portion of the module comprises removing at least one coating on the surface or cleaning the surface of the work portion and preparing the surface for application of a new coating.

The method of any preceding clause, wherein installing the protective barrier about the non-work portion of the module comprises positioning a resilient protective barrier on or in the non-work portion of the module and positioning a rigid protective barrier over the resilient protective barrier and compressing the resilient protective barrier against the non-work portion of the module with the rigid protective barrier to inhibit the passage of foreign material into or onto a non-work portion of the module.

The method of any preceding clause, wherein treating the surface of the work portion comprises applying a chemically active material to the surface of the work portion.

The method of any preceding clause, further comprising pressurizing the interior space of the receptacle to inhibit the passage of foreign material into or onto a non-work portion of the module.

The method of any preceding clause, further comprising removing at least a portion of the protective barrier and applying a coating to the surface of the work portion of the module while the at least a portion of the module remains in the fixture.

The method of any preceding clause, further comprising applying heat to the work portion of the module while the at least a portion of the module remains in the fixture.

The method of any preceding clause, wherein applying heat to the work portion comprises locally heating the work portion of one part of the different parts of the assembly without applying additional heat to other parts of the assembly.

The method of any preceding clause, further comprising positioning a heating assembly adjacent to the work portion for applying heat to the work portion while the at least a portion of the module remains in the fixture.

The method of any preceding clause, wherein the opening of the fixture has a circular shape and the heating assembly has an annular shape.

The method of any preceding clause, wherein the heating assembly comprises an insulative mat having a heating coil integrated therewith, the heating coil arranged in a spiral within the insulative mat.

The method of any preceding clause, wherein the heating assembly comprises an exterior rigid insulator and a pair of spaced-apart interior rigid heating coil supports, wherein the insulative mat and the heating coil are held in place between the exterior rigid insulator and the pair of spaced-apart interior rigid heating coil supports and are positioned such that the insulative mat and heating coil are spaced-apart from the work portion of the module.

The method of any preceding clause, wherein the exterior rigid insulator and the pair of interior rigid heating coil supports each have a thermal expansion coefficient, wherein the thermal expansion coefficient of the pair of interior rigid heating coil supports is less than or equal to the thermal expansion coefficient of the exterior rigid insulator.

The method of any preceding clause, wherein the pair of interior rigid heat heating coil supports are of a nickel-iron alloy material.

The method of any preceding clause, further comprising operably coupling a rotor of the module to a rotor mounting portion of the fixture within the receptacle such that the work portion of the module is positioned above the opening of the fixture.

The method of any preceding clause, further comprising positioning a furnace enclosure about the work portion of the module to extend thereabout while the at least a portion of the module remains in the fixture.

The method of any preceding clause, wherein after positioning the furnace enclosure about the work portion of the module to extend thereabout, a non-work portion of the module extends outside of the furnace enclosure and outside of the receptacle.

The method of any preceding clause, further comprising cooling a non-work portion of the module while applying heat to the work portion of the module.

The method of any preceding clause, wherein cooling a non-work portion of the module comprises circulating air into a rotor of the module.

The method of any preceding clause, wherein the module comprises a rotor and the fixture comprises a rotor mounting portion configured to locate and support the rotor within the interior space of the receptacle; wherein inserting the at least a portion of the module of the gas turbine engine into the fixture comprises mounting the rotor to the rotor mounting portion such that the module is supported by the rotor mounting portion in the predetermined orientation.

A system for treating a module of a gas turbine engine, the system comprising: a fixture comprising a receptacle defining an interior space for receiving the module therein; wherein the receptacle is configured to hold the module in a predetermined orientation with at least a portion of the module positioned in the interior space; wherein the receptacle comprises an opening to allow the module to be received in the receptacle; wherein the fixture comprises an interface configured to selectively engage with a plurality of different components for use in conducting different treatments of a work portion of the module; wherein the plurality of different components for conducting different treatments of the work portion of the module include: one or more protective barrier components to protect a non-work portion of the module that is not being treated from an incursion of foreign material during application of an abrasive or a chemically active material to the work portion; and a heating assembly sized and configured to be positioned in or adjacent to the opening of the receptacle; the heating assembly configured to heat the work portion of the module.

The system of any preceding clause, wherein the one or more protective barrier components comprise a radially outer rigid protective barrier member to inhibit the incursion of foreign material into or onto at least a radially outer non-work portion of the module; wherein the one or more protective barrier components further comprise a radially inner rigid protective barrier member to inhibit the incursion of foreign particles into or onto at least a radially inner non-work portion of the module; wherein the radially outer rigid protective barrier member and the radially inner rigid protective barrier member together define an opening to allow access to the work portion of the module.

The system of any preceding clause, wherein the opening defined by the one or more protective barrier components is an annular opening corresponding with an annular-shaped work portion of the module.

The system of any preceding clause, wherein the opening of the receptacle has a circular shape and the heating assembly has an annular shape.

The system of any preceding clause, wherein the heating assembly comprises an insulative mat having a heating coil integrated therewith, the heating coil arranged in a spiral within the insulative mat.

The system of any preceding clause, wherein the heating assembly comprises an exterior rigid insulator and a pair of spaced-apart interior rigid heating coil supports, wherein the insulative mat and the heating coil are held in place between the exterior rigid insulator and the pair of spaced-apart interior rigid heating coil supports and are positioned such that the insulative mat and heating coil are spaced-apart from the work portion of the module.

The system of any preceding clause, wherein the exterior rigid insulator and the pair of interior rigid heating coil supports each have a thermal expansion coefficient, wherein the thermal expansion coefficient of the pair of interior rigid heating coil supports is less than or equal to the thermal expansion coefficient of the exterior rigid insulator.

The system of any preceding clause, wherein the pair of spaced-apart interior rigid heating coil supports are of a nickel-iron alloy material.

The system of any preceding clause, wherein the heating assembly further comprises a temperature sensor configured to be in direct contact with a non-work portion of the module.

The system of any preceding clause, further comprising a controller operably connected to the temperature sensor to control a heat output of the heating assembly based on feedback from the plurality of temperature sensors.

The system of any preceding clause, wherein the heating assembly comprises a furnace enclosure configured to engage the interface of the fixture, the furnace enclosure having a first opening to allow the work portion of the module to be positioned within the furnace enclosure with a non-work portion of the module connected to the work portion extending outside of the furnace enclosure.

The system of any preceding clause, wherein the furnace enclosure comprises a second opening for allowing another non-work portion of the module connected to the work portion to be positioned outside of the furnace enclosure and outside of the receptacle.

## Claims

1. A method (600) for treating a module (208) of a gas turbine engine, the method (600) comprising:
inserting at least a portion of the module (208) of the gas turbine engine into a fixture (202), wherein the module (208) comprises an assembly of different parts;
wherein the fixture (202) comprises a receptacle (204) defining an opening (207) and an interior space (206) configured for receiving at least a portion of the module (208) in the interior space (206);
wherein the fixture (202) is configured to hold the module (208) in a predetermined orientation with at least a portion of the module (208) positioned in the interior space (206); and
treating a surface of a work portion (220) of the module (208) while the module (208) remains in the fixture (202).

2. The method (600) of claim 1, wherein the module (208) of the gas turbine engine is high pressure turbine module, and wherein the work portion (220) comprises a forward web portion (224) of a stage one disk (210) of the high pressure turbine module.

3. The method (600) of claim 1 or 2, further comprising installing at least one protective barrier (214) about a non-work portion of the module (208) to define and leave exposed the work portion (220) of the module (208) to be treated, the at least one protective barrier (214) defining an opening in the fixture (202) to allow access to the work portion (220), the at least one protective barrier (214) being configured to inhibit passage of foreign material into or onto a remaining non-work portion (222) of the module (208).

4. The method (600) of claim 3, wherein installing the protective barrier (214) about the non-work portion of the module (208) comprises positioning a resilient protective barrier (226) on or in the non-work portion (222) of the module (208) and positioning a rigid protective barrier (228) over the resilient protective barrier (226) and compressing the resilient protective barrier (226) against the non-work portion (222) of the module (208) with the rigid protective barrier (228) to inhibit the passage of foreign material into or onto the non-work portion (220) of the module (208).

5. The method (600) of any preceding claim, further comprising pressurizing the interior space (206) of the receptacle (204) to inhibit the passage of foreign material into or onto a non-work portion (222) of the module (208).

6. The method (600) of claim 3, further comprising removing at least a portion of the protective barrier (214) and applying a coating to the surface of the work portion (220) of the module (208) while the at least a portion of the module (208) remains in the fixture (202).

7. The method (600) of any preceding claim, further comprising positioning a heating assembly (342) adjacent to the work portion (220) for applying heat to the work portion (220) while the at least a portion of the module (208) remains in the fixture (202).

8. The method (600) of any preceding claim, further comprising positioning a furnace enclosure (542) about the work portion (520) of the module (508) to extend thereabout while the at least a portion of the module (508) remains in the fixture (502).

9. The method (600) of any preceding claim, wherein the module (208) comprises a rotor (514) and the fixture (202) comprises a rotor mounting portion (536) configured to locate and support the rotor (514) within the interior space (206) of the receptacle (204);
wherein inserting the at least a portion of the module (208) of the gas turbine engine into the fixture (202) comprises mounting the rotor (514) to the rotor mounting portion (536) such that the module (208) is supported by the rotor mounting portion (536) in the predetermined orientation.

10. A system (200)(300) for treating a module (208) of a gas turbine engine, the system comprising:
a fixture (202) comprising a receptacle (204) defining an interior space (206) for receiving the module (208) therein;
wherein the receptacle (204) is configured to hold the module (208) in a predetermined orientation with at least a portion of the module (208) positioned in the interior space (206);
wherein the receptacle (204) comprises an opening (207) to allow the module (208) to be received in the receptacle (204);
wherein the fixture (202) comprises an interface (264) configured to selectively engage with a plurality of different components for use in conducting different treatments of a work portion (220) of the module (208);
wherein the plurality of different components for conducting different treatments of the work portion (220) of the module (208) include:
one or more protective barrier components (214) to protect a non-work portion (222) of the module (208) that is not being treated from an incursion of foreign material during application of an abrasive or a chemically active material to the work portion; and
a heating assembly (342) sized and configured to be positioned in or adjacent to the opening (207) of the receptacle (204), the heating assembly (342) configured to heat the work portion (220) of the module (208).

11. The system (200)(300) of claim 10, wherein the one or more protective barrier components (214) comprise a radially outer rigid protective barrier member (228) to inhibit the incursion of foreign material into or onto at least a radially outer non-work portion (222) of the module (208);
wherein the one or more protective barrier components (214) further comprise a radially inner rigid protective barrier member (246) to inhibit the incursion of foreign particles into or onto at least a radially inner non-work portion (222) of the module (208); and
wherein the radially outer rigid protective barrier member (228) and the radially inner rigid protective barrier member (246) together define an opening to allow access to the work portion (220) of the module (208).

12. The system (200)(300) of claim 10 or 11, wherein the heating assembly (342) comprises an insulative mat (348) having a heating coil (350) integrated therewith, the heating coil (350) arranged in a spiral within the insulative mat (348).

13. The system (200)(300) of claim 12, wherein the heating assembly (342) comprises an exterior rigid insulator (344) and a pair of spaced-apart interior rigid heating coil supports (346), wherein the insulative mat (348) and the heating coil (350) are held in place between the exterior rigid insulator (344) and the pair of spaced-apart interior rigid heating coil supports (346) and are positioned such that the insulative mat (348) and heating coil (350) are spaced-apart from the work portion (220) of the module (208).

14. The system (200)(300) of any of claims 10 to 13, wherein the heating assembly (342) comprises a furnace enclosure (542) configured to engage the interface (264) of the fixture (202), the furnace enclosure (542) having a first opening (544) to allow the work portion (520) of the module (508) to be positioned within the furnace enclosure (542) with a non-work portion (522) of the module (508) connected to the work portion (520) extending outside of the furnace enclosure (542).

15. The system (200)(300) of claim 14, wherein the furnace enclosure (542) comprises a second opening (546) for allowing another non-work portion of the module (508) connected to the work portion (520) to be positioned outside of the furnace enclosure (542) and outside of the receptacle (204).
